# EUROPEAN PATENT SPECIFICATION

(11) **EP 2 441 796 B1**
(45) Date of publication and mention of the grant of the patent: **19.04.2017**
(21) Application number: 11173430.7
(22) Date of filing: 11.07.2011
(51) Int. Cl.: C08K 3/08, H01B 1/22, B82Y 30/00

(54) **Conductive nanosilver paste, especially for high current and high temperature applications**
Leitfähige Nansilberpaste, insbesondere für Starkstrom- und Hochtemperaturanwendungen
Pâte conductrice à nanoparticules d'argent, spécialement pour applications à courant élevé et haute température

(30) Priority: 16.09.2010 PL 39241910
(43) Date of publication of application: 18.04.2012
(73) Proprietor: Instytut Technologii Materialów Elektronicznych, 01-919 Warszawa (PL)
(72) Inventor: Jakubowska, Malgorzata, 02-541 Warszawa (PL); Mlozniak, Anna, 01-737 Warszawa (PL); Jarosz, Mateusz, 20-538 Lublin (PL)
(74) Representative: Sielewiesiuk, Jakub

(56) References cited:
- EP-A1- 2 147 733
- US-A1- 2009 162 557
- DATABASE WPI Week 200926 Thomson Scientific, London, GB; AN 2009-F03828 XP002671148, & KR 2008 0114202 A (DONGWOO FINE CHEM CO LTD) 31 December 2008 (2008-12-31)
- BASAK ET AL: "Size selective photoluminescence in poly(methyl methacrylate) thin solid films with dispersed silver nanoparticles synthesized by a novel method", CHEMICAL PHYSICS LETTERS, ELSEVIER BV, NL, vol. 420, no. 1-3, 10 March 2006 (2006-03-10), pages 115-119, XP005309149, ISSN: 0009-2614, DOI: 10.1016/J.CPLETT.2005.12.062

## Description

### Technical Field

The invention relates to a conductive nanosilver paste, especially for high current and high temperature applications. The invention is applicable in electronics, in particular for depositing by screen printing in the technology of manufacturing layers for applications in electronics, including elastic and printed electronics.

### Background

Standard silver pastes for screen printing known from the patent applications nos. US 5075262 and US 5183784 consist of silver flakes, carrier and glaze. During sintering, the glaze softens and melts, aiding the process such that the pastes become sintered below the melting temperature of silver, that is 600°C to 850°C. However, glaze remains in the layer and causes exploitation problems in high temperatures. In turns, the conductive pathways can work only up to the temperature of 200°C.

From the publication by Sunghyun Park et. al. in Solid state phenomena 124-126 (2007), 632-642 and Colloids and surfaces A.: Physicochem Eng. Aspects 313-314 (2008), 197-201, conductive silver pastes are known, consisting of silver micropowder, lead free glaze, different amounts and fractions of nanosilver and an organic carrier, applied in thick layer technology. Also the publications by the same authors in Proc. SPIE 6423, 64235J (2007) and Journal of Nanoscience and Nanotechnology, 7, 11, 2007, 3917-3919(3) confirm the contents of lead-free glaze in those pastes.

From the patent application no. US 2010/0120960 A1 the composition is known comprising nanosilver and organic carrier, which can be applied as conductive nanosilver paste. As the starting material, silver oxide is used, which is added to a polymer mixture and subsequently reduced.

From the patent application no. US 2007/0018140 A1 a method for manufacturing metal nanoparticles is known, which metal nanoparticles are then used in conductive inks, not suitable for deposition by screen printing due to their too sparse consistency.

A paste known form the patent application no. WO 2009/094537 A2 comprises silver nanopowder and a commercial carrier. The authors focus on applications of such pastes rather than on their manufacturing.

From the patent applications nos. US 2010/0093851 A1 and US 2010/0127223 A1 polymer pastes, also called lacquers, are known, which contain functional conductive phase and an organic carrier. In the former case, it is a polymer composite, comprising a thermoplastic polyamide polymer mixed with an additive in a form of an organic disulphide and silver. In the latter case, silver flakes with stearic acid as the surfactant, organic medium - resin and C-11 ketone as solvent are used. However, in those pastes after firing - a polymerized resin remains, which decreases their electrical conductivity.

KR20080114202 discloses conductive paste composition comprising (in wt.%) conductive nanoparticles (20-90), dispersing agent (1-20), binder (1-25), reactive monomer (1-20) and remainder of solvent, such that total weight of whole composition is 100% wt.%.

### Summary

The paste according to the invention consists of 80 wt% to 85 wt% of silver nanopowder and 15 wt% to 20 wt% of organic carrier based on polymethyl methacrylate, being a 6 wt% to 16 wt% solution of polymethyl methacrylate in buthyl carbitol acetate.

Said silver nanopowder preferably comprises 0 wt% to 30 wt% of silver carbonate nanoparticles and/or 0 wt% to 20 wt% of silver oxide nanoparticles.

Preferably, the paste comprises silver nanopowder whose particles have the size of 10nm to 100 nm.

Most preferably the silver nanopowder comprises a mixture of nanoparticles of silver carbonate and silver oxide in the weight ratio of 3:2 respectively.

The inventive paste utilizes features of silver nanoparticles, which have a very high surface energy. Eliminating glaze from the composition of the paste and at the same time using such a content of organic carrier that this carrier, during sintering of layers, totally burns out, results in an increased electrical and thermal conductivity of the paste.

After sintering, in a layer of the paste deposited on a substrate, only silver phase is present and the adhesion between the particles as well as between the layer and the substrate is ensured by the surface energy of silver nanoparticles. Packing density of silver particles in such a layer is higher than in the case of thick layers obtained so far and equals to about 80% of the density of solid silver. The rest are closed or open pores filled with air.

The silver carbonate and/or silver oxide nanoparticles, comprised in the silver nanopowder used as the starting material, after deposition on the substrate decompose during the sintering process. Nanosilver carbonate already at the temperature of 217°C changes into nanosilver oxide, which, at the temperature of 350°C, changes into silver nanopowder "in statu nascendi", which remarkably increases reactivity of silver powder and its susceptibility to sintering.

An advantage of the inventive paste is the temperature of sintering of layers ranging from 250°C to 350°C, i.e. remarkably lower comparing to known pastes, which enables far wider application of the inventive paste in electronic systems. Layers obtained from the inventive paste resist continuous work at high values of current and temperature - they work at the temperature of 450°C, loaded with a current of 2.5A and a current density of 2500A/mm².

The pastes according to the invention are suitable for deposition, in particular by screen printing, as well as for applications in printed and elastic electronics, due to their low temperature of sintering.

### Examples

The examples given below illustrate embodiments of the paste according to the invention.

### Example 1

10g of silver nanopowder, having the particle size of 100nm, was energetically grounded in a mortar. Next, a carrier was added, being an 8% solution of polymethyl methacrylate in buthyl carbitol acetate, in the amount of 2g, while still stirring. Next, the mixture was three times roll milled on stainless steel rolls in a three roll mill. The thus obtained paste was then deposited by screen printing on alumina ceramics, after which it was sintered at the temperature of 300°C for 90 minutes. The obtained layer comprised only solid silver and had a high electrical and thermal conductivity. The obtained layer resisted continuous work at the temperature of 450°C, loaded with a current of 2.5A, having density of 2500A/mm².

### Example 2

10g of silver nanopowder, having the particle size of 10nm, was energetically grounded in a mortar. Next, a carrier was added, being an 8% solution of polymethyl methacrylate in buthyl carbitol acetate, in the amount of 2g, while still stirring. Next, the mixture was three times roll milled on stainless steel rolls in a three roll mill. The thus obtained paste was then deposited by screen printing on alumina ceramics, after which it was sintered at the temperature of 250°C for 90 minutes. The obtained layer comprised only solid silver and had a high electrical and thermal conductivity. The obtained layer resisted continuous work at the temperature of 450°C, loaded with a current of 2.5A, having density of 2500A/mm².

### Example 3

10g of silver nanopowder, having the particle size of 100nm, comprising an addition of 15 wt% of silver carbonate nanopowder and 10 wt% of silver oxide nanopowder was energetically grounded in a mortar. Next, a carrier was added, being an 8% solution of polymethyl methacrylate in buthyl carbitol acetate, in the amount of 2g, while still stirring. Next, the mixture was three times roll milled on stainless steel rolls in a three roll mill. The thus obtained paste was then deposited by screen printing on alumina ceramics, after which it was sintered at the temperature of 350°C for 90 minutes. The obtained layer comprised only solid silver and had a high electrical and thermal conductivity. The obtained layer resisted continuous work at the temperature of 450°C, loaded with a current of 2.5A, having density of 2500A/mm².

### Example 4

10g of silver nanopowder, having the particle size of 100nm, comprising an addition of 1g of silver carbonate nanopowder, having the particle size of 10nm to 20nm was energetically grounded in a mortar. Next, a carrier was added, being an 8% solution of polymethyl methacrylate in buthyl carbitol acetate, in the amount of 2g, while still stirring. Next, the procedure as in example 3 was followed. The obtained layer, after sintering, contained only solid silver. It had a high electrical and thermal conductivity. The obtained layer resisted continuous work at the temperature of 450°C, loaded with a current of 2.5A, having density of 2500A/mm².

## Claims

1. Conductive nanosilver paste, especially for high current and high temperature applications, comprising silver nanopowder and an organic carrier, **characterized in that** it consists of 80 wt% to 85 wt% of silver nanopowder and 15 wt% to 20 wt% of an organic carrier based on polymethyl methacrylate, being a 6 wt% to 16 wt% solution of polymethyl methacrylate in buthyl carbitol acetate.

2. The paste according to claim 1, **characterized in that** it contains silver nanopowder comprising an addition of 0 wt% to 30 wt% of silver carbonate nanoparticles and/or 0 wt% to 20 wt% of silver oxide nanoparticles.

3. The paste according to claim 2, **characterized in that** said silver nanopowder comprises a mixture of silver carbonate nanoparticles and silver oxide nanoparticles in the weight ratio of 3:2 respectively.

4. The paste according to any of the preceding claims, **characterized in that** it contains silver nanopowder having the particle size of 10nm to 100nm.

## Patentansprüche

1. Leitfähige Nanosilberpaste, insbesondere für Hochstrom- und Hochtemperaturanwendungen, bestehend aus Silbernanopulver und einem organischen Träger, **dadurch gekennzeichnet, dass** es aus 80 Gew.-% bis 85 Gew.-% Silbernanopulver und 15 Gew.-% bis 20 Gew.-% eines organischen Trägers auf der Basis von Polymethylmethacrylat besteht, wobei es eine 6 Gew.-% bis 16 Gew.-% Lösung von Polymethylmethacrylat in Butylkarbitolacetat ist.

2. Paste nach Anspruch 1, **dadurch gekennzeichnet, dass** sie Silbernanopulver enthält, das eine Zugabe von 0 Gew.-% bis 30 Gew.-% Silbercarbonat-Nanopartikeln und/oder 0 Gew.-% bis 20 Gew.-% Silberoxid-Nanopartikeln enthält.

3. Paste nach Anspruch 2, **dadurch gekennzeichnet, dass** das Silbernanopulver ein Gemisch aus Silbercarbonat-Nanopartikeln und Silberoxid-Nanopartikeln im entsprechenden Gewichtsverhältnis von 3: 2 enthält.

4. Paste nach einem der vorhergehenden Ansprüche, **dadurch gekennzeichnet, dass** sie Silbernanopulver mit einer Partikelgröße von 10 nm bis 100 nm enthält.

## Revendications

1. Pâte de nano-argent conductrice, en particulier pour les applications à courant élevé et à haute température, comprenant de la nanopoudre d'argent et un support organique, **caractérisé en ce qu'**elle consiste en 80% en poids à 85% en poids de nanopoudre d'argent et 15% en poids à 20% en poids d'un support organique à base de méthacrylate de polyméthyle, étant une solution de 6% en poids à 16% en poids de méthacrylate de polyméthyle dans de l'acétate de butylcarbitol.

2. La pâte selon la revendication 1, **caractérisée en ce qu'**elle contient de la nanopoudre d'argent comprenant une addition de 0% en poids à 30% en poids de nanoparticules de carbonate d'argent et/ou de 0% en poids à 20% en poids de nanoparticules d'oxyde d'argent.

3. La pâte selon la revendication 2, **caractérisée en ce que** ladite nanopoudre d'argent comprend un mélange de nanoparticules de carbonate d'argent et de nanoparticules d'oxyde d'argent dans le rapport pondéral de 3: 2 respectivement.

4. La pâte selon l'une quelconque des revendications précédentes, **caractérisée en ce qu'**elle contient de la nanopoudre d'argent ayant la taille de particule de 10 nm à 100 nm.
